# EUROPEAN PATENT SPECIFICATION

(11) **EP 4 592 175 B1**
(45) Date of publication and mention of the grant of the patent: **25.11.2026**
(21) Application number: 24153960.0
(22) Date of filing: 25.01.2024
(51) Int. Cl.: B64C 9/02, B64C 9/08, B64C 9/22

(54) **WING FOR AN AIRCRAFT**
FLÜGEL FÜR EIN FLUGZEUG
AILE POUR UN AÉRONEF

(43) Date of publication of application: 30.07.2025
(73) Proprietor: Airbus Operations GmbH, 21129 Hamburg (DE)
(72) Inventor: Schlipf, Bernhard, 21129 Hamburg (DE); Daandels, Dort, 21129 Hamburg (DE)
(74) Representative: Airbus Germany

(56) References cited:
- US-A1- 2018 281 927
- US-A1- 2019 193 837
- US-A1- 2022 324 548

## Description

The present invention relates to a wing for an aircraft, comprising a main wing and a high lift assembly. Further aspects of the invention relate to a high lift assembly for such a wing, as well as to an aircraft comprising such a wing and/or comprising such a high lift assembly.

The high lift assembly comprises a high lift body, and a connection assembly for movably connecting the high lift body to the main wing, such that the high lift body can be moved relative to the main wing between a retracted position and at least one extended position. The high lift body might be formed as a leading edge high lift body, such as a slat or a droop nose, or might be formed as a trailing edge high lift body, such as a flap.

The connection assembly comprises a first connection element, such as a slat track or a linkage, preferably extending in a chord direction or in a chord plane, and a second connection element, such as a slat track or a linkage, preferably extending in a chord direction or in a chord plane. The first connection element is movably mounted to the main wing and is mounted, preferably fixedly and/or directly mounted, to the high lift body. The second connection element is movably mounted to the main wing and is mounted, preferably fixedly and/or directly mounted, to the high lift body in a position spaced apart from the first connection element in a wing span direction.

Further, the connection assembly comprises a drive system that is provided at, preferably fixedly mounted to, the main wing and that is connected to the high lift body, preferably indirectly connected to the high lift body via the first connection element and/or the second connection element, for driving of the high lift body, i.e. initiating movement of the high lift body, between the retracted position and the extended position. The drive system may e.g. comprises a first drive unit and a second drive unit spaced apart from one another in the wing span direction. The first drive unit may comprise a drive pinion or a geared rotary actuator (GRA) and may preferably further comprise a first input section coupled to a drive shaft, a first gear unit, and a first output section drivingly coupled to the first connection element. The second drive unit may comprise a drive pinion or a geared rotary actuator (GRA) and may preferably further comprise a second input section coupled to the drive shaft, a second gear unit, and a second output section drivingly coupled to the second connection element. The first and second gear units preferably transform high rotational speed with low torque from the first and second input sections, i.e. from the drive shaft, into low rotational speed with high torque at the first and second output sections.

Such wings are known in the art. For the wings known in the art, skew cases are possible, where the first and second connection elements or the first and second drive units do not move in sync and the high lift body might be skewed about a vertical axis.

US 2018/281927 A1 and US 2022/324548 A1 present wings for aircrafts with mechanisms to prevent slat skewing.

The object of the present invention is to prevent such skew cases of the high lift body.

This object is achieved in that the connection assembly comprises a sync arrangement coupled between the first connection element and the second connection element. The sync arrangement comprises a first engagement track preferably extending in a wing chord direction, having an uneven surface and being directly or indirectly coupled to the first connection element for movement with the first connection element. The sync arrangement comprises a second engagement track preferably extending in a wing chord direction and/or in parallel to the first engagement track, having an uneven surface and being directly or indirectly coupled to the second connection element for movement with the second connection element. The sync arrangement comprises a locking mechanism preferably mounted to the main wing and engaging the first engagement track and the second engagement track when the high lift body is moved between the retracted position and the extended position. The locking mechanism is configured such that it permits synchronous movement of the first and second connection elements and restricts asynchronous movement of the first and second connection elements by interlocking with the first and second engagement tracks.

By such a sync arrangement skew cases of the high lift body can be effectively prevented.

The first engagement track and the second engagement track have a surface comprising a sequence of alternating projections and recesses, preferably periodically alternating projections and recesses, wherein preferably the projections of the first engagement track project towards the projections of the second engagement track and towards the locking mechanism arranged between the first and second engagements tracks. The projections of both the first engagement track and the second engagement track preferably project in the wing span direction. By such a sequence of alternating projections and recesses a very efficient interlocking by the locking mechanism is enabled.

The sequence of alternating projections and recesses of the first engagement track corresponds to the sequence of alternating projections and recesses of the second engagement track in such a way that with synchronous movement of the first and second connection elements a projection of the first engagement track is aligned with a recess of the second engagement track, and a recess of the first engagement track is aligned with a projection of the second engagement track, while with asynchronous movement of the first and second connection elements a projection of the first engagement track is disaligned with a recess of the second engagement track and a recess of the first engagement track is disaligned with a projection of the second engagement track. Preferably, the form and dimensions are the same for all projections of the first and second engagement tracks, and the form and dimensions are the same for all recesses of the first and second engagement tracks, while the form and dimensions of the recesses represent a negative image of the form and dimensions of the projections. However, in some cases, such as when the locking mechanism comprises rollers for engaging the first and second engagement tracks, the recesses might be wider than the projections, for the rollers to fit in the recesses and have a balanced course. Such engagement tracks allow a very smooth and efficient engagement with the locking mechanism.

It is further preferred that the distance between the uneven surface of the first engagement track and the uneven surface of the second engagement track remains constant along the extension of the first and second engagement tracks, the distance preferably being measured in the wing span direction and/or perpendicular to the direction of extension of the first and second engagement tracks. However, in some cases, such as when the locking mechanism comprises rollers for engaging the first and second engagement tracks, at the transition portions between the projections and recesses, in particular at the bevelled surfaces, the distance between the first and second engagement tracks might be larger than in the central parts of the projections and recesses. In such a way, a very smooth and efficient engagement of the engagement tracks with the locking mechanism is enabled.

It is also preferred that the projections and/or the recesses have a tapered form, preferably with rounded edges, or have a wavelike form, such as a sinusoidal form. Preferably, rounded edges of a tapered form are used when roller are provided at the first and second ends of the front and rear locking elements for engagement with the first and second engagement tracks, wherein the radius of the projection edges is larger than the radius of the recess edges and larger as the radius of the rollers, preferably approximately equalling the radius of the recess edges plus the radius of the rollers, and the angle of the projection edges is between 110° and 160°. With such a form of the projections and recesses a very smooth engagement and efficient locking is enabled.

According to a preferred embodiment, the first engagement track is preferably fixedly and/or directly mounted to or formed integrally with the first connection element. Alternatively or additionally, the second engagement track is preferably fixedly and/or directly mounted to or formed integrally with the second connection element. For example, when the first and second connections elements are formed as slat tracks or linkages, the first and second engagement tracks might be mounted to or formed in the side surface of slat tracks or linkages. This relates to a first efficient option for the position of the first and second engagement tracks.

According to an alternative preferred embodiment, the drive system comprises a first drive pinion for driving the first connection element and a second drive pinion for driving a second connection element. Preferably, the first engagement track is preferably fixedly and/or directly mounted to or formed integrally with the first drive pinion, e.g. at the side of the first drive pinion so that the second engagement track has a circumferential extension. Additionally or alternatively, the second engagement track is preferably fixedly and/or directly mounted to or formed integrally with the second drive pinion, e.g. at the side of the second drive pinion so that the second engagement track has a circumferential extension. This relates to a second efficient option for the position of the first and second engagement tracks.

According to a preferred embodiment, the locking mechanism comprises a front locking element and a rear locking element, preferably arranged subsequently with respect to the wing chord direction, both extending from the first engagement track to the second engagement track, preferably in the wing span direction, and having a first end at the first engagement track and a second end at the second engagement track. The front locking element and/or the rear locking element are preferably in the form of a bar or other elongate element. For low friction engagement with the first and second engagement tracks, rollers might be arranged at the first and second ends, or the first and second ends might be rounded, tapered, or chamfered. The locking mechanism is configured such that the front locking element and the rear locking element are movable, preferably independently from one another, between the first and second engagement tracks, preferably in the wing span direction, so that the front locking element and the rear locking element can subsequently follow the uneven surface of the first engagement track and of the second engagement track, when the first and second engagement tracks are moved, preferably in the wing chord direction and/or along their axis of extension, upon movement of the high lift body between the retracted position and the extended position. In such a way, a very efficient engagement and locking by the locking mechanism can be achieved.

In particular, it is preferred that the front locking element is spaced from the rear locking element by a distance corresponding to the distance between a projection and an adjacent recess in the first engagement track and/or in the second engagement track, such that the first end of the front locking element can engage a projection of the first engagement track while at the same time the first end of the rear locking element can engage a recess of the first engagement track, and vice versa, and/or such that the second end of the front locking element can engage a recess of the second engagement track while at the same time the second end of the rear locking element can engage a projection of the second engagement track, and vice versa. In such a way, a very efficient engagement and locking by the locking mechanism can be achieved.

It is further preferred that the locking mechanism is configured in the following way: With synchronous movement of the first and second connection elements, the first end of the front locking element engages with a recess in the first engagement track while the second end of the front locking element engages with a projection in the second engagement track, and at the same time the first end of the rear locking element engages with a projection in the first engagement track while the second end of the front locking element engages with a recess in the second engagement track, and vice versa. With asynchronous movement of the first and second connection elements, the front locking element and/or the rear locking element cause blockage between a projection of the first engagement track and a projection of the second engagement track, thereby locking the first engagement track and the second engagement track against one another, and as a consequence restrict movement of the first and second engagement tracks and thus of the first and second connection elements out of an aligned position. In such a way, a very efficient engagement and locking by the locking mechanism can be achieved.

It is also preferred that the front locking element and/or the rear locking element are movably mounted to the main wing by a slide bearing or a linkage bearing allowing movement of the front locking element and the rear locking element between the first engagement track and the second engagement track. Preferably, the linkage bearing is formed as a four-bar-linkage or a rocker linkage. The four-bar-linkage might include two spaced pivotable links per each of the front locking element and the rear locking element, each of the links being pivotably mounted to the main wing and mounted to the front or rear locking element, respectively. The rocker linkage might include two spaced rocker links, each being pivotably mounted to both the front locking element and the rear locking element as well as being pivotably mounted to the main wing at a position between the front and rear locking elements. In such a way, an efficient and reliable bearing of the front and rear locking elements is provided.

According to a preferred embodiment, the sync arrangement comprises a torque limiter device configured to stop the drive unit when the locking mechanism interlocks with the first and second engagement tracks, in particular, when the front locking element and/or the rear locking element cause blockage between the first engagement track and the second engagement track. In such a way, further damage to the connection assembly can be avoided.

According to a further preferred embodiment, the high lift assembly is formed as a leading edge high lift assembly, the high lift body is formed as a slat, and the first and second connection elements are formed as a first and a second slat track. Preferably, each of the first slat track and the second slat track has an elongate form that extends along a track longitudinal axis between a front end and a rear end and has an intermediate portion between the front and rear ends. Preferably, the front end of each of the first and second slat track is mounted to the slat, wherein the rear end and/or the intermediate portion of each of the first and second slat track are movable mounted to the main wing, preferably by a roller or slide bearing, such that the slat track is movable along the track longitudinal axis. Preferably, the first and second engagement tracks are mounted to or formed in the side surface of the first and second slat tracks, respectively. Such an arrangement is very simple, reliable, and efficient.

A further aspect of the present invention relates to a high lift assembly for the wing according to any of the afore-described embodiments. The high lift assembly comprises a high lift body and a connection assembly for movably connecting the high lift body to a main wing, such that the high lift body can be moved between a retracted position and at least one extended position. The connection assembly comprises a first connection element and a second connection element. The first connection element is configured to be movably mounted to the main wing and is mounted to the high lift body. The second connection element is configured to be movably mounted to the main wing and is mounted to the high lift body in a position spaced apart from the first connection element in a wing span direction. The connection assembly comprises a drive system that is configured to be mounted to the main wing and that is connected to the high lift body for driving the high lift body between the retracted position and the extended position. The connection assembly comprises a sync arrangement coupled between the first and second connection elements. The sync arrangement comprises a first engagement track having an uneven surface and being coupled to the first connection element. The sync arrangement comprises a second engagement track having an uneven surface and being coupled to the second connection element. The sync arrangement comprises a locking mechanism engaging the first engagement track and the second engagement track when the high lift body is moved between the retracted position and the extended position. The locking mechanism is configured such that it permits synchronous movement of the first and second connection elements and restricts asynchronous movement of the first and second connection elements by interlocking with the first and second engagement tracks. Features and effects explained further above in connection with the wing apply vis-à-vis also in case of the high lift assembly.

A further aspect of the present invention relates to an aircraft comprising a wing according to any of the afore-described embodiments and/or comprising a high lift assembly according to any of the afore-described embodiments. Features and effects explained further above in connection with the wing and with the high lift assembly apply vis-à-vis also in case of the aircraft.

Hereinafter, preferred embodiments of the present invention are described in more detail by means of a drawing. The drawing shows in
- Fig. 1: a perspective view of an aircraft according to an embodiment of the invention,
- Fig. 2: a perspective schematic view of a wing according to an embodiment of the invention,
- Fig. 3: a perspective schematic view of a wing according to another embodiment of the invention,
- Fig. 4: a top view of a high lift assembly according to a first embodiment for the wing shown in Fig. 2,
- Fig. 5: a top view of a high lift assembly according to a second embodiment for the wing shown in Fig. 2,
- Fig. 6: a top view of a high lift assembly according to a third embodiment for the wing shown in Fig. 2.

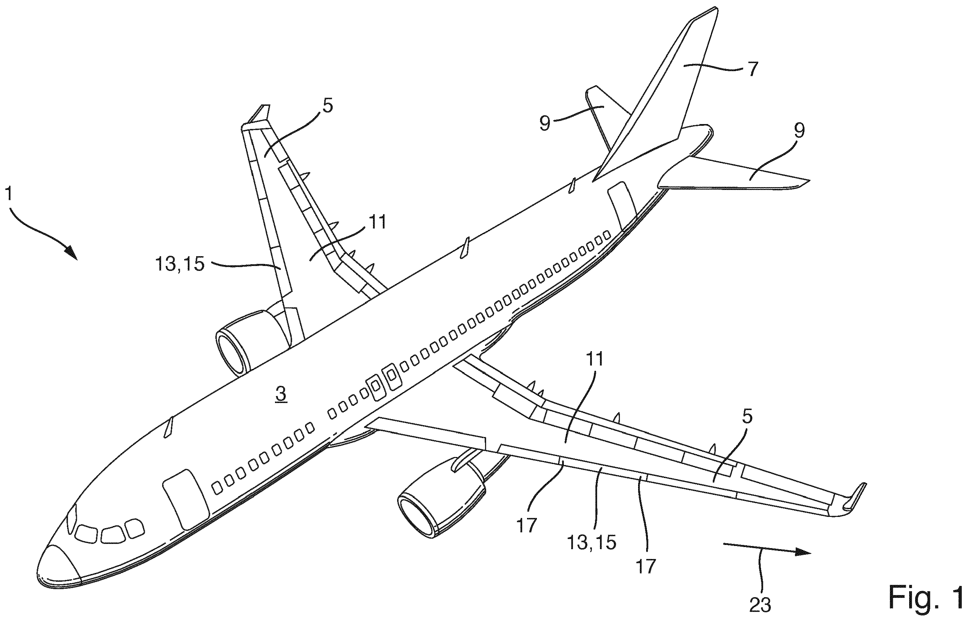

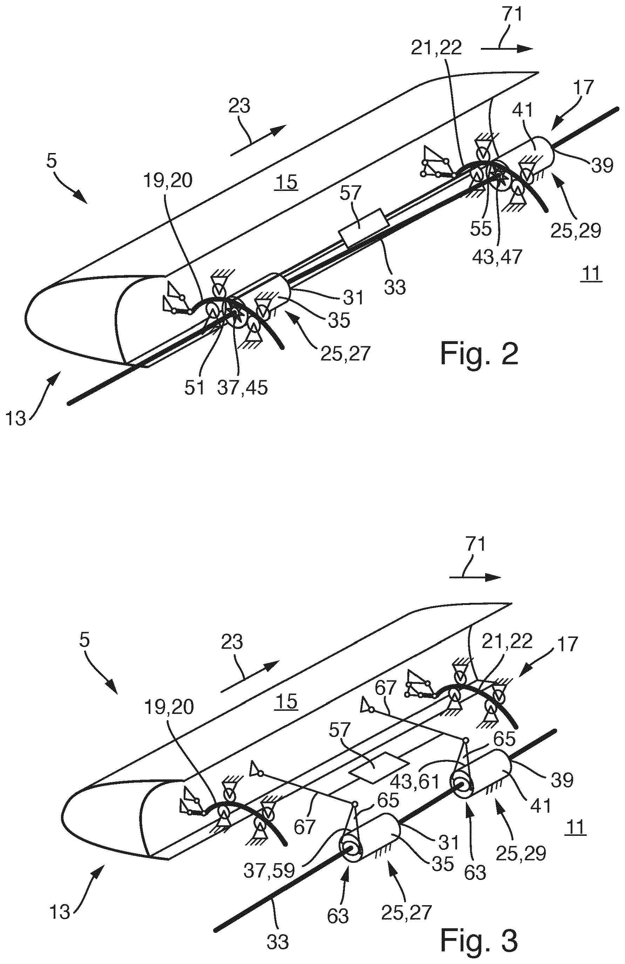

In Fig. 1 an embodiment of an aircraft 1 according to the present invention is illustrated. The aircraft 1 comprises a fuselage 3, wings 5, a vertical tail plane 7 and a horizontal tail plane 9. Figs. 2 and 3 show details of the wings 5 of the aircraft 1.

Fig. 2 shows an embodiment of the wing 5 according to the invention. The wing 5 comprises a main wing 11 and a high lift assembly 13 movable relative to the main wing 11 to increase lift of the wing 5. The high lift assembly 13 comprises a high lift body 15 and a connection assembly 17. The high lift body 15 in the present embodiment is a slat. The connection assembly 17 is configured for connecting the high lift body 15 to the leading edge of the main wing 11 in such a way that the high lift body 15 is movable relative to the main wing 11 between a retracted position and at least one extended position.

The connection assembly 17 comprises a first connection element 19 and a second connection element 21. The first connection element 19 is movably mounted to the main wing 11 and is fixedly mounted to the high lift body 15. The second connection element 21 is movably mounted to the main wing 5 and is fixedly mounted to the high lift body 15 in a position spaced apart from the first connection element 19 in a wing span direction 23.

Further, the connection assembly 17 comprises a drive system 25 that is fixedly mounted to the main wing 11 and that is connected to the high lift body 15 for driving the high lift body 15 between the retracted position and the extended position. The drive system 25 comprises a first drive unit 27 and a second drive unit 29 spaced apart from one another in the wing span direction 23. The first drive unit 27 is formed as a geared rotary actuator (GRA) and has a first input section 31 coupled to a drive shaft 33, a first gear unit 35, and a first output section 37 drivingly coupled to the first connection element 19. The second drive unit 29 is formed as a geared rotary actuator (GRA) and has a second input section 39 coupled to the drive shaft 33, a second gear unit 41, and a second output section 43 drivingly coupled to the second connection element 21. The first and second gear units 35, 41 transform high rotational speed with low torque from the first and second input sections 31, 39, i.e. from the drive shaft 33, into low rotational speed with high torque at the first and second output sections 37, 43. The first output section 37 comprises a first drive pinion 45 and the second output section 43 comprises a second drive pinion 47.

The first connection element 19 is formed as a first slat track 20 that is movably guided at the main wing 11 and that is fixedly mounted to the high lift body 15. The first drive pinion 45 drivingly engages a first toothed rack 51 at the surface of the first slat track 20. Additionally, the second connection element 21 is formed as a second slat track 22 that is movably guided at the main wing 11 and that is fixedly mounted to the high lift body 15. The second drive pinion 47 drivingly engages a second toothed rack 55 at the surface of the second slat track 22. The first slat track 20 and the second slat track 22 are in the form of an elongate support beam that is movable along the direction of its elongate extension.

In Fig. 3 a similar wing 5 as shown in Fig. 2 is illustrated. The wing 5 of Fig. 3 differs from the wing 5 of Fig. 2 by the drive system 25. Instead of having first and second drive pinions 45, 47 for engaging the first and second slat tracks, the first and second drive units 27, 29 comprise first and second linkages 59, 61 including a rotary actuator 63 with a rotating drive arm 65, and a drive link 67 rotatably coupled to the drive arm 65 and coupled to the high lift body 15.

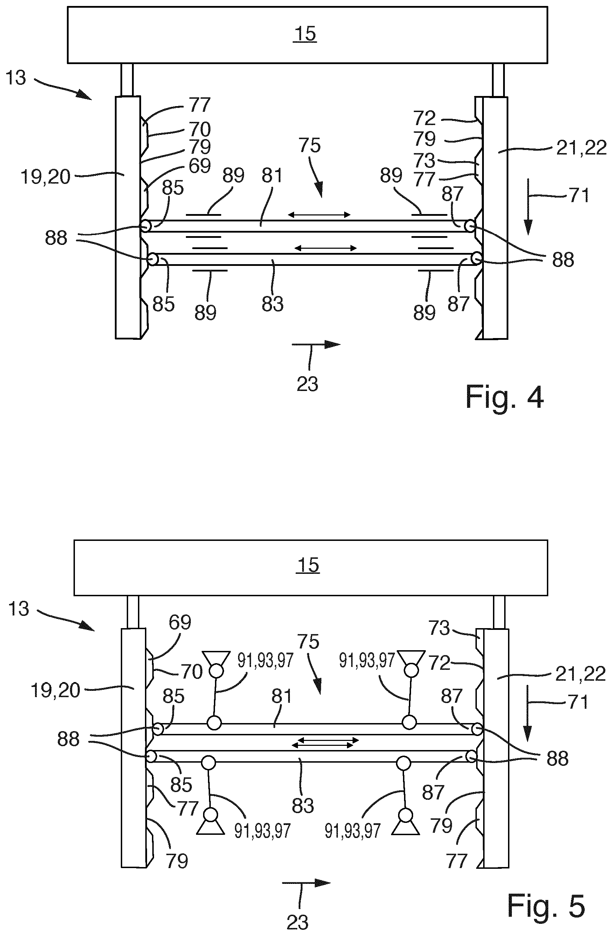

As shown in any of Figs. 4 to 6, the connection assembly 17 comprises a sync arrangement 57 coupled between the first connection element 19 and the second connection element 21. The sync arrangement 57 comprises a first engagement track 69 extending in a wing chord direction 71 and having an uneven surface 70 and being coupled to the first connection element 19 for movement with the first connection element 19. The sync arrangement 57 comprises a second engagement track 73 extending in a wing chord direction 71 and in parallel to the first engagement track 69, having an uneven surface 70 and being coupled to the second connection element 21 for movement with the second connection element 21. The sync arrangement 57 comprises a locking mechanism 75 mounted to the main wing 11 and engaging the first engagement track 69 and the second engagement track 73 when the high lift body 15 is moved between the retracted position and the extended position. The locking mechanism 75 is configured such that it permits synchronous movement of the first and second connection elements 19, 21 and restricts asynchronous movement of the first and second connection elements 19, 21 by interlocking with the first and second engagement tracks 69, 73.

The first engagement track 69 and the second engagement track 73 have a surface 70, 72 comprising a sequence of periodically alternating projections 77 and recesses 79, wherein the projections 77 of the first engagement track 69 project towards the projections 77 of the second engagement track 73 and towards the locking mechanism 75 arranged between the first and second engagements tracks 69, 73. The projections 77 of both the first engagement track and the second engagement track 69, 73 project in the wing span direction 23. The projections 77 and the recesses 79 have a tapered form with rounded edges.

The sequence of alternating projections 77 and recesses 79 of the first engagement track 69 corresponds to the sequence of alternating projections 77 and recesses 79 of the second engagement track 73 in such a way that with synchronous movement of the first and second connection elements 19, 21 a projection 77 of the first engagement track 69 is aligned with a recess 79 of the second engagement track 73, and a recess 79 of the first engagement track 69 is aligned with a projection 77 of the second engagement track 73, while with asynchronous movement of the first and second connection elements 19, 21 a projection 77 of the first engagement track 69 is disaligned with a recess 79 of the second engagement track 73 and a recess 79 of the first engagement track 69 is disaligned with a projection 77 of the second engagement track. 73

The distance between the uneven surface 70 of the first engagement track 69 and the uneven surface 72 of the second engagement track 73 remains constant along the extension of the first and second engagement tracks 69, 73, the distance being measured in the wing span direction 23 and/or perpendicular to the direction of extension of the first and second engagement tracks 69, 73.

The first engagement track 69 is mounted to or formed integrally with the first connection element 19. Additionally, the second engagement track 73 is mounted to or formed integrally with the second connection element 21. In case of the first and second connection element 19, 21 being a first and second slat track 20, 22 (see Fig. 2), the first and second engagement track 69 73 might be arranged in the side of the first and second slat track 20, 22, wherein when the first and second connection element 19, 21 being a first and second linkage 59, 61 (see Fig. 3), the first and second engagement track 69, 73 might be arranged in the side of the first and second linkage 59, 61. Alternatively, the first engagement track 69 might also be mounted to or formed integrally with the first drive pinion 45, e.g. at the side of the first drive pinion 45 so that the first engagement track 69 has a circumferential extension. Additionally, the second engagement track 73 might be mounted to or formed integrally with the second drive pinion 47, e.g. at the side of the second drive pinion 47 so that the second engagement track 73 has a circumferential extension.

The locking mechanism 75 comprises a front locking element 81 and a rear locking element 83 arranged subsequently with respect to the wing chord direction 71, both extending from the first engagement track 69 to the second engagement track 73 in the wing span direction 23 and having a first end 85 at the first engagement track 69 and a second end 87 at the second engagement track 73. The front locking element 81 and the rear locking element 83 are in the form of a bar. For low friction engagement with the first and second engagement tracks 69, 73, rollers 88 are arranged at the first and second ends 85 87. The locking mechanism 75 is configured such that the front locking element 81 and the rear locking element 83 are movable independently from one another between the first and second engagement tracks 69, 73 in the wing span direction 23, so that the front locking element 81 and the rear locking element 83 can subsequently follow the uneven surface 70, 72 of the first engagement track 69 and of the second engagement track 73, when the first and second engagement tracks 69, 73 are moved in the wing chord direction 71 upon movement of the high lift body 15 between the retracted position and the extended position.

The front locking element 81 is spaced from the rear locking element 83 by a distance corresponding to the distance between a projection 77 and an adjacent recess 79 in the first engagement track 69 and in the second engagement track 73, such that the first end 85 of the front locking element 81 can engage a projection 77 of the first engagement track 69 while at the same time the first end 85 of the rear locking element 83 can engage a recess 79 of the first engagement track 69, and vice versa, and such that the second end 87 of the front locking element 81 can engage a recess 79of the second engagement track 73 while at the same time the second end 87 of the rear locking element 83 can engage a projection 77 of the second engagement track 73, and vice versa.

The locking mechanism 75 is configured in the following way: With synchronous movement of the first and second connection elements 19, 21, the first end 85 of the front locking element 81 engages with a recess 79 in the first engagement track 69 while the second end 87of the front locking element 81 engages with a projection 77 in the second engagement track 73, and at the same time the first end 85 of the rear locking element 83 engages with a projection 77 in the first engagement track 69 while the second end 87 of the front locking element 81 engages with a recess 79 in the second engagement track 73, and vice versa. With asynchronous movement of the first and second connection elements 19, 21, the front locking element 81 and/or the rear locking element 83 cause blockage between a projection 77 of the first engagement track 69 and a projection 77 of the second engagement track 73, thereby locking the first engagement track 69 and the second engagement track 73 against one another, and as a consequence restrict movement of the first and second engagement tracks 69, 73 and thus of the first and second connection elements 19, 21 out of an aligned position.

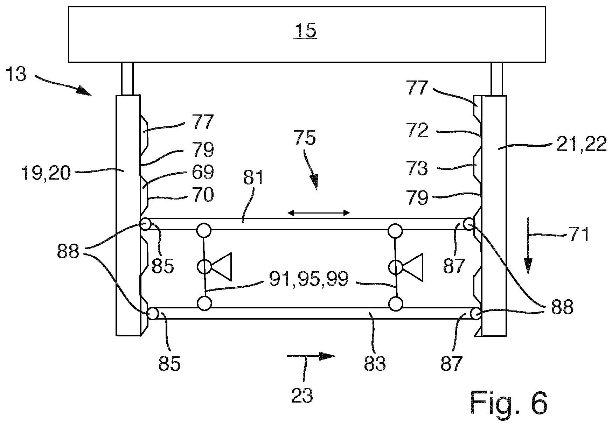

As shown in Figs. 4 to 6, the front locking element 81 and the rear locking element 83 are movably mounted to the main wing 11 by a slide bearing 89 (Fig. 4) or a linkage bearing 91 (Figs. 5, 6) allowing movement of the front locking element 81 and the rear locking element 83 between the first engagement track 69 and the second engagement track 73. The linkage bearing 91 is formed as a four-bar-linkage 93 or a rocker linkage 95. The four-bar-linkage 93, as shown in Fig. 5, includes two spaced pivotable links 97 per each of the front locking element 81 and the rear locking element 83, each of the links 97 being pivotably mounted to the main wing 11 and mounted to the front or rear locking element 81, 83, respectively. The rocker linkage 95, as shown in Fig. 6, includes two spaced rocker links 99, each being pivotably mounted to both the front locking element 81 and the rear locking element 83 as well as being pivotably mounted to the main wing 11 at a position between the front and rear locking elements 81, 83.

The sync arrangement 57 comprises a torque limiter device (not shown) configured to stop the drive system 25 when the locking mechanism 75 interlocks with the first and second engagement tracks 69, 73, in particular, when the front locking element 81 and/or the rear locking element 83 cause blockage between the first engagement track 69 and the second engagement track 73.

By a wing 5 with a sync arrangement 57 as described above skew cases of the high lift body 15 can be effectively detected and prevented.

## Claims

1. A high lift assembly (13) for a wing (5) comprising a main wing (11), the high lift assembly comprising a high lift body (15), and
a connection assembly (17) for movably connecting the high lift body (15) to the main wing (11), such that the high lift body (15) can be moved between a retracted position and at least one extended position,
wherein the connection assembly (17) comprises a first connection element (19) and a second connection element (21),
wherein the first connection element (19) is configured to be movably mounted to the main wing (11) and is mounted to the high lift body (15), and
wherein the second connection element (21) is configured to be movably mounted to the main wing (11) and is mounted to the high lift body (15) in a position spaced apart from the first connection element (19) in a wing span direction (23),
wherein the connection assembly (17) comprises a drive system (25) that is configured to be mounted to the main wing (11) and that is connected to the high lift body (15) for driving the high lift body (15) between the retracted position and the extended position,
wherein the connection assembly (17) comprises a sync arrangement (57) coupled between the first and second connection elements (19, 21),
the sync arrangement (57) comprises a first engagement track (69) having an uneven surface (70) and being coupled to the first connection element (19),
the sync arrangement (57) comprises a second engagement track (73) having an uneven surface (72) and being coupled to the second connection element (21),
the sync arrangement (57) comprises a locking mechanism (75) engaging the first engagement track (69) and the second engagement track (73) when the high lift body (15) is moved between the retracted position and the extended position, and
the locking mechanism (75) is configured such that it permits synchronous movement of the first and second connection elements (19, 21) and restricts asynchronous movement of the first and second connection elements (19, 21) by interlocking with the first and second engagement tracks (69, 73),
**characterized in that** the first engagement track (69) and the second engagement track (73) have a surface (70, 72) comprising a sequence of alternating projections (77) and recesses (79), and **in that**
the sequence of alternating projections (77) and recesses (79) of the first engagement track corresponds to the sequence of alternating projections (77) and recesses (79) of the second engagement track (73) in such a way that with synchronous movement of the first and second connection elements (19, 21) a projection (77) of the first engagement track (69) is aligned with a recess (79) of the second engagement track (73), while with asynchronous movement of the first and second connection elements (19, 21) a projection (77) of the first engagement track (69) is disaligned with a recess (79) of the second engagement track (73).

2. A wing (5) for an aircraft (1), comprising
a main wing (11), and
a high lift assembly (13) according to claim 1.

3. The wing (5) according to claim 2, wherein the distance between the uneven surface (70) of the first engagement track (69) and the uneven surface (72) of the second engagement track (73) remains constant along the extension of the first and second engagement tracks (69, 73).

4. The wing (5) according to claim 2 or 3, wherein the projections (77) and/or the recesses (79) have a tapered form or have a wavelike form.

5. The wing (5) according to any of claims 2 to 4, wherein the first engagement track (69) is mounted to or formed integrally with the first connection element (19), and/or
Wherein the second engagement track (73) is mounted to or formed integrally with the second connection element (21).

6. The wing (5) according to any of claims 2 to 4, wherein the drive system (25) comprises a first drive pinion (45) for driving the first connection element (19) and a second drive pinion (47) for driving a second connection element (21),
wherein the first engagement track (69) is mounted to or formed integrally with the first drive pinion (45), and/or
wherein the second engagement track (73) is mounted to or formed integrally with the second drive pinion (47).

7. The wing (5) according to any of claims 2 to 6, wherein the locking mechanism (75) comprises a front locking element (81) and a rear locking element (83) both extending from the first engagement track (69) to the second engagement track (73) and having a first end (85) at the first engagement track (69) and a second end (87) at the second engagement track (73),
wherein the locking mechanism (75) is configured such that the front locking element (81) and the rear locking element (83) are movable between the first and second engagement tracks (69, 73), so that the front locking element (81) and the rear locking element (83) can follow the uneven surface (70) of the first engagement track (69) and of the second engagement track (73), when the first and second engagement tracks (69, 73) are moved upon movement of the high lift body (15) between the retracted position and the extended position.

8. The wing (5) according to claim 7, wherein the front locking element (81) is spaced from the rear locking element (83) by a distance corresponding to the distance between a projection (77) and an adjacent recess (79) in the first engagement track (69) and/or in the second engagement track (73),
such that the first end (85) of the front locking element (81) can engage a projection (77) of the first engagement track (69) while at the same time the first end (85) of the rear locking element (83) can engage a recess (79) of the first engagement track (69), or vice versa, and/or
such that the second end (87) of the front locking element (81) can engage a recess (79) of the second engagement track (73) while at the same time the second end (87) of the rear locking element (83) can engage a projection (77) of the second engagement track (73), or vice versa.

9. The wing (5) according to claim 7 or 8, wherein the locking mechanism (75) is configured such that
with synchronous movement of the first and second connection elements (19, 21), the first end (85) of the front locking element (81) engages with a recess (79) in the first engagement track (73) while the second end (87) of the front locking element (81) engages with a projection (77) in the second engagement track (73), and at the same time the first end (85) of the rear locking element (83) engages with a projection (77) in the first engagement track (69) while the second end (87) of the front locking element (81) engages with a recess (79) in the second engagement track, and vice versa,
with asynchronous movement of the first and second connection elements (19, 21), the front locking element (81) and/or the rear locking element (83) cause blockage between a projection (77) of the first engagement track (69) and a projection (77) of the second engagement track, thereby locking the first engagement track (69) and the second engagement track (73) against one another.

10. The wing (5) according to any of claims 7 to 9, wherein the front locking element (81) and/or the rear locking element (83) are movably mounted to the main wing (11) by a slide bearing (89) or a linkage bearing (91) allowing movement of the front locking element (81) and the rear locking element (83) between the first engagement track (69) and the second engagement track (73).

11. The wing (5) according to any of claims 2 to 10, wherein the sync arrangement (57) comprises a torque limiter device configured to stop the drive system (25) when the locking mechanism (75) interlocks with the first and second engagement tracks (69, 73).

12. The wing (5) according to any of claims 2 to 10, wherein the high lift assembly (13) is formed as a leading edge high lift assembly, the high lift body (15) is formed as a slat, and the first and second connection elements (19, 21) are formed as a first and a second slat track (20, 22),
wherein each of the first slat track (20) and the second slat track (22) has an elongate form that extends along a track longitudinal axis between a front end and a rear end and has an intermediate portion between the front and rear ends,
wherein the front end of each of the first and second slat track (20, 22) is mounted to the slat,
wherein the rear end and/or the intermediate portion of each of the first and second slat track (20, 22) are movable mounted to the main wing (11), such that the slat track (20, 22) is movable along the track longitudinal axis.

13. An aircraft (1) comprising a wing (5) according to any of claims 2 to 12 and/or comprising a high lift assembly (13) according to claim 1.

## Patentansprüche

1. Hochauftriebsanordnung (13) für den Flügel (5) nach einem der Ansprüche 1 bis 11, umfassend einen Hochauftriebskörper (15), und eine Verbindungsanordnung (17) zum beweglichen Verbinden des Hochauftriebskörpers (15) mit einem Hauptflügel (11), so dass der Hochauftriebskörper (15) zwischen einer eingefahrenen Position und mindestens einer ausgefahrenen Position bewegt werden kann, wobei die Verbindungsanordnung (17) ein erstes Verbindungselement (19) und ein zweites Verbindungselement (21) umfasst, wobei das erste Verbindungselement (19) so konfiguriert ist, dass es beweglich an dem Hauptflügel (11) montiert ist, und an dem Hochauftriebskörper (15) montiert ist, und wobei das zweite Verbindungselement (21) so konfiguriert ist, dass es beweglich an dem Hauptflügel (11) montiert ist, und an dem Hochauftriebskörper (15) in einer Position montiert ist, die von dem ersten Verbindungselement (19) in einer Flügelspannweitenrichtung (23) beabstandet ist, wobei die Verbindungsanordnung (17) ein Antriebssystem (25) umfasst, das so konfiguriert ist, dass es an dem Hauptflügel (11) montiert ist, und das mit dem Hochauftriebskörper (15) verbunden ist, um den Hochauftriebskörper (15) zwischen der eingefahrenen Position und der ausgefahrenen Position anzutreiben, wobei die Verbindungsanordnung (17) eine Synchronisationsanordnung (57) umfasst, die zwischen dem ersten und dem zweiten Verbindungselement (19, 21) gekoppelt ist, die Synchronisationsanordnung (57) eine erste Eingriffsbahn (69) umfasst, die eine unebene Oberfläche (70) aufweist und mit dem ersten Verbindungselement (19) gekoppelt ist, die Synchronisationsanordnung (57) eine zweite Eingriffsbahn (73) umfasst, die eine unebene Oberfläche (72) aufweist und mit dem zweiten Verbindungselement (21) gekoppelt ist, die Synchronisationsanordnung (57) einen Verriegelungsmechanismus (75) umfasst, der mit der ersten Eingriffsbahn (69) und der zweiten Eingriffsbahn (73) in Eingriff steht, wenn der Hochauftriebskörper (15) zwischen der eingefahrenen Position und der ausgefahrenen Position bewegt wird, und der Verriegelungsmechanismus (75) so konfiguriert ist, dass er eine synchrone Bewegung des ersten und des zweiten Verbindungselements (19, 21) zulässt und eine asynchrone Bewegung des ersten und des zweiten Verbindungselements (19, 21) durch gegenseitiges Verriegeln mit der ersten und der zweiten Eingriffsbahn (69, 73) einschränkt, **dadurch gekennzeichnet, dass** die erste Eingriffsbahn (69) und die zweite Eingriffsbahn (73) eine Oberfläche (70, 72) aufweisen, die eine Folge von abwechselnden Vorsprüngen (77) und Vertiefungen (79) umfasst, und dass die Folge von abwechselnden Vorsprüngen (77) und Vertiefungen (79) der ersten Eingriffsbahn der Folge von abwechselnden Vorsprüngen (77) und Vertiefungen (79) der zweiten Eingriffsbahn (73) derart entspricht, dass bei synchroner Bewegung des ersten und des zweiten Verbindungselements (19, 21) ein Vorsprung (77) der ersten Eingriffsbahn (69) zu einer Vertiefung (79) der zweiten Eingriffsbahn (73) ausgerichtet ist, während bei asynchroner Bewegung des ersten und des zweiten Verbindungselements (19, 21) ein Vorsprung der ersten Eingriffsbahn zu einer Vertiefung (79) der zweiten Eingriffsbahn (73) nicht ausgerichtet ist

2. Flügel (5) für ein Luftfahrzeug (1), umfassend einen Hauptflügel (11), eine Hochauftriebsanordnung (13) nach Anspruch 1.

3. Flügel (5) nach Anspruch 2, wobei der Abstand zwischen der unebenen Oberfläche (70) der ersten Eingriffsbahn (69) und der unebenen Oberfläche (72) der zweiten Eingriffsbahn (73) entlang der Erstreckung der ersten und der zweiten Eingriffsbahn (69, 73) konstant bleibt.

4. Flügel (5) nach Anspruch 2 oder 3, wobei die Vorsprünge (77) und/oder die Vertiefungen (79) eine sich verjüngende Form aufweisen oder eine wellenartige Form aufweisen.

5. Flügel (5) nach einem der Ansprüche 2 bis 4, wobei die erste Eingriffsbahn (69) an dem ersten Verbindungselement (19) montiert oder einstückig mit diesem ausgebildet ist, und/oder wobei die zweite Eingriffsbahn (73) an dem zweiten Verbindungselement (21) montiert oder einstückig mit diesem ausgebildet ist.

6. Flügel (5) nach einem der Ansprüche 2 bis 4, wobei das Antriebssystem (25) ein erstes Antriebsritzel (45) zum Antreiben des ersten Verbindungselements (19) und ein zweites Antriebsritzel (47) zum Antreiben eines zweiten Verbindungselements (21) umfasst, wobei die erste Eingriffsbahn (69) an dem ersten Antriebsritzel (45) montiert oder einstückig mit diesem ausgebildet ist, und/oder wobei die zweite Eingriffsbahn (73) an dem zweiten Antriebsritzel (47) montiert oder einstückig mit diesem ausgebildet ist.

7. Flügel (5) nach einem der Ansprüche 2 bis 6, wobei der Verriegelungsmechanismus (75) ein vorderes Verriegelungselement (81) und ein hinteres Verriegelungselement (83) umfasst, die sich beide von der ersten Eingriffsbahn (69) zu der zweiten Eingriffsbahn (73) erstrecken und ein erstes Ende (85) an der ersten Eingriffsbahn (69) und ein zweites Ende (87) an der zweiten Eingriffsbahn (73) aufweisen, wobei der Verriegelungsmechanismus (75) so konfiguriert ist, dass das vordere Verriegelungselement (81) und das hintere Verriegelungselement (83) zwischen der ersten und der zweiten Eingriffsbahn (69, 73) beweglich sind, so dass das vordere Verriegelungselement (81) und das hintere Verriegelungselement (83) der unebenen Oberfläche (70) der ersten Eingriffsbahn (69) und der zweiten Eingriffsbahn (73) folgen können, wenn die erste und die zweite Eingriffsbahn (69, 73) bei einer Bewegung des Hochauftriebskörpers (15) zwischen der eingefahrenen Position und der ausgefahrenen Position bewegt werden.

8. Flügel (5) nach Anspruch 7, wobei das vordere Verriegelungselement (81) von dem hinteren Verriegelungselement (83) um einen Abstand beabstandet ist, der dem Abstand zwischen einem Vorsprung (77) und einer benachbarten Vertiefung (79) in der ersten Eingriffsbahn (69) und/oder in der zweiten Eingriffsbahn (73) entspricht, so dass das erste Ende (85) des vorderen Verriegelungselements (81) mit einem Vorsprung (77) der ersten Eingriffsbahn (69) in Eingriff kommen kann, während gleichzeitig das erste Ende (85) des hinteren Verriegelungselements (83) mit einer Vertiefung (79) der ersten Eingriffsbahn (69) in Eingriff kommen kann, oder umgekehrt, und/oder so dass das zweite Ende (87) des vorderen Verriegelungselements (81) mit einer Vertiefung (79) der zweiten Eingriffsbahn (73) in Eingriff kommen kann, während gleichzeitig das zweite Ende (87) des hinteren Verriegelungselements (83) mit einem Vorsprung (77) der zweiten Eingriffsbahn (73) in Eingriff kommen kann, oder umgekehrt.

9. Flügel (5) nach Anspruch 7 oder 8, wobei der Verriegelungsmechanismus (75) so konfiguriert ist, dass bei synchroner Bewegung des ersten und des zweiten Verbindungselements (19, 21) das erste Ende (85) des vorderen Verriegelungselements (81) mit einer Vertiefung (79) in der ersten Eingriffsbahn (73) in Eingriff steht, während das zweite Ende (87) des vorderen Verriegelungselements (81) mit einem Vorsprung (77) in der zweiten Eingriffsbahn (73) in Eingriff steht, und gleichzeitig das erste Ende (85) des hinteren Verriegelungselements (83) mit einem Vorsprung (77) in der ersten Eingriffsbahn (69) in Eingriff steht, während das zweite Ende (87) des vorderen Verriegelungselements (81) mit einer Vertiefung (79) in der zweiten Eingriffsbahn in Eingriff steht, und umgekehrt, bei asynchroner Bewegung des ersten und des zweiten Verbindungselements (19, 21) das vordere Verriegelungselement (81) und/oder das hintere Verriegelungselement (83) eine Blockierung zwischen einem Vorsprung (77) der ersten Eingriffsbahn (69) und einem Vorsprung (77) der zweiten Eingriffsbahn bewirken, wodurch die erste Eingriffsbahn (69) und die zweite Eingriffsbahn (73) gegeneinander verriegelt werden.

10. Flügel (5) nach einem der Ansprüche 7 bis 9, wobei das vordere Verriegelungselement (81) und/oder das hintere Verriegelungselement (83) an dem Hauptflügel (11) durch ein Gleitlager (89) oder ein Gestängelager (91) beweglich gelagert sind, was eine Bewegung des vorderen Verriegelungselements (81) und des hinteren Verriegelungselements (83) zwischen der ersten Eingriffsbahn (69) und der zweiten Eingriffsbahn (73) ermöglicht.

11. Flügel (5) nach einem der Ansprüche 2 bis 10, wobei die Synchronisationsanordnung (57) eine Drehmomentbegrenzungsvorrichtung umfasst, die so konfiguriert ist, dass sie das Antriebssystem (25) anhält, wenn der Verriegelungsmechanismus (75) mit der ersten und der zweiten Eingriffsbahn (69, 73) ineinandergreift.

12. Flügel (5) nach einem der Ansprüche 2 bis 10, wobei die Hochauftriebsanordnung (13) als eine Vorderkanten-Hochauftriebsanordnung ausgebildet ist, der Hochauftriebskörper (15) als ein Vorflügel ausgebildet ist, und das erste und das zweite Verbindungselement (19, 21) als eine erste und eine zweite Vorflügelschiene (20, 22) ausgebildet sind, wobei jede der ersten Vorflügelschiene (20) und der zweiten Vorflügelschiene (22) eine längliche Form aufweist, die sich entlang einer Schienenlängsachse zwischen einem vorderen Ende und einem hinteren Ende erstreckt und einen Zwischenabschnitt zwischen dem vorderen und dem hinteren Ende aufweist, wobei das vordere Ende jeder der ersten und der zweiten Vorflügelschiene (20, 22) an dem Vorflügel montiert ist, wobei das hintere Ende und/oder der Zwischenabschnitt jeder der ersten und der zweiten Vorflügelschiene (20, 22) beweglich an dem Hauptflügel (11) montiert sind, so dass die Vorflügelschiene (20, 22) entlang der Schienenlängsachse beweglich ist.

13. Luftfahrzeug (1), umfassend einen Flügel (5) nach einem der Ansprüche 2 bis 12 und/oder umfassend eine Hochauftriebsanordnung (13) nach Anspruch 1.

## Revendications

1. Ensemble hypersustentateur (13) pour l'aile (5) selon l'une quelconque des revendications 1 à 11, comprenant un corps hypersustentateur (15), et un ensemble de liaison (17) pour relier de manière mobile le corps hypersustentateur (15) à une aile principale (11), de telle sorte que le corps hypersustentateur (15) peut être déplacé entre une position rétractée et au moins une position déployée, dans lequel l'ensemble de liaison (17) comprend un premier élément de liaison (19) et un deuxième élément de liaison (21), dans lequel le premier élément de liaison (19) est configuré pour être monté de manière mobile sur l'aile principale (11) et est monté sur le corps hypersustentateur (15), et dans lequel le deuxième élément de liaison (21) est configuré pour être monté de manière mobile sur l'aile principale (11) et est monté sur le corps hypersustentateur (15) dans une position espacée du premier élément de liaison (19) dans une direction de l'envergure de l'aile (23), dans lequel l'ensemble de liaison (17) comprend un système d'entraînement (25) qui est configuré pour être monté sur l'aile principale (11) et qui est relié au corps hypersustentateur (15) pour entraîner le corps hypersustentateur (15) entre la position rétractée et la position déployée, dans lequel l'ensemble de liaison (17) comprend un agencement de synchronisation (57) couplé entre les premier et deuxième éléments de liaison (19, 21), l'agencement de synchronisation (57) comprend une première piste d'engagement (69) ayant une surface irrégulière (70) et étant couplée au premier élément de liaison (19), l'agencement de synchronisation (57) comprend une seconde piste d'engagement (73) ayant une surface irrégulière (72) et étant couplée au deuxième élément de liaison (21), l'agencement de synchronisation (57) comprend un mécanisme de verrouillage (75) venant en prise avec la première piste d'engagement (69) et la seconde piste d'engagement (73) lorsque le corps hypersustentateur (15) est déplacé entre la position rétractée et la position déployée, et le mécanisme de verrouillage (75) est configuré de telle sorte qu'il permet un mouvement synchrone des premier et deuxième éléments de liaison (19, 21) et restreint un mouvement asynchrone des premier et deuxième éléments de liaison (19, 21) par verrouillage réciproque avec les première et seconde pistes d'engagement (69, 73), **caractérisé en ce que** la première piste d'engagement (69) et la seconde piste d'engagement (73) ont une surface (70, 72) comprenant une séquence alternée de saillies (77) et d'évidements (79), et **en ce que** la séquence alternée de saillies (77) et d'évidements (79) de la première piste d'engagement correspond à la séquence alternée de saillies (77) et d'évidements (79) de la seconde piste d'engagement (73) de telle manière que, lors d'un mouvement synchrone des premier et deuxième éléments de liaison (19, 21), une saillie (77) de la première piste d'engagement (69) est alignée avec un évidement (79) de la seconde piste d'engagement (73), tandis que, lors d'un mouvement asynchrone des premier et deuxième éléments de liaison (19, 21), une saillie de la première piste d'engagement est désalignée avec un évidement (79) de la seconde piste d'engagement (73)

2. Aile (5) pour un aéronef (1), comprenant une aile principale (11), un ensemble hypersustentateur (13) selon la revendication 1.

3. Aile (5) selon la revendication 2, dans laquelle la distance entre la surface irrégulière (70) de la première piste d'engagement (69) et la surface irrégulière (72) de la seconde piste d'engagement (73) reste constante le long de l'étendue des première et seconde pistes d'engagement (69, 73).

4. Aile (5) selon la revendication 2 ou 3, dans laquelle les saillies (77) et/ou les évidements (79) ont une forme effilée ou ont une forme ondulée.

5. Aile (5) selon l'une quelconque des revendications 2 à 4, dans laquelle la première piste d'engagement (69) est montée sur le premier élément de liaison (19) ou formée d'un seul tenant avec celui-ci, et/ou dans laquelle la seconde piste d'engagement (73) est montée sur le deuxième élément de liaison (21) ou formée d'un seul tenant avec celui-ci.

6. Aile (5) selon l'une quelconque des revendications 2 à 4, dans laquelle le système d'entraînement (25) comprend un premier pignon d'entraînement (45) pour entraîner le premier élément de liaison (19) et un second pignon d'entraînement (47) pour entraîner un second élément de liaison (21), dans laquelle la première piste d'engagement (69) est montée sur le premier pignon d'entraînement (45) ou formée d'un seul tenant avec celui-ci, et/ou dans laquelle la seconde piste d'engagement (73) est montée sur le second pignon d'entraînement (47) ou formée d'un seul tenant avec celui-ci.

7. Aile (5) selon l'une quelconque des revendications 2 à 6, dans laquelle le mécanisme de verrouillage (75) comprend un élément de verrouillage avant (81) et un élément de verrouillage arrière (83) s'étendant tous deux de la première piste d'engagement (69) à la seconde piste d'engagement (73) et ayant une première extrémité (85) au niveau de la première piste d'engagement (69) et une seconde extrémité (87) au niveau de la seconde piste d'engagement (73), dans laquelle le mécanisme de verrouillage (75) est configuré de telle sorte que l'élément de verrouillage avant (81) et l'élément de verrouillage arrière (83) sont mobiles entre les première et seconde pistes d'engagement (69, 73), de sorte que l'élément de verrouillage avant (81) et l'élément de verrouillage arrière (83) peuvent suivre la surface irrégulière (70) de la première piste d'engagement (69) et de la seconde piste d'engagement (73), lorsque les première et seconde pistes d'engagement (69, 73) sont déplacées lors du mouvement du corps hypersustentateur (15) entre la position rétractée et la position déployée.

8. Aile (5) selon la revendication 7, dans laquelle l'élément de verrouillage avant (81) est espacé de l'élément de verrouillage arrière (83) d'une distance correspondant à la distance entre une saillie (77) et un évidement (79) adjacent dans la première piste d'engagement (69) et/ou dans la seconde piste d'engagement (73), de telle sorte que la première extrémité (85) de l'élément de verrouillage avant (81) peut venir en prise avec une saillie (77) de la première piste d'engagement (69) tandis qu'en même temps la première extrémité (85) de l'élément de verrouillage arrière (83) peut venir en prise avec un évidement (79) de la première piste d'engagement (69), ou inversement, et/ou de telle sorte que la seconde extrémité (87) de l'élément de verrouillage avant (81) peut venir en prise avec un évidement (79) de la seconde piste d'engagement (73) tandis qu'en même temps la seconde extrémité (87) de l'élément de verrouillage arrière (83) peut venir en prise avec une saillie (77) de la seconde piste d'engagement (73), ou inversement.

9. Aile (5) selon la revendication 7 ou 8, dans laquelle le mécanisme de verrouillage (75) est configuré de telle sorte que lors d'un mouvement synchrone des premier et deuxième éléments de liaison (19, 21), la première extrémité (85) de l'élément de verrouillage avant (81) vient en prise avec un évidement (79) dans la première piste d'engagement (73) tandis que la seconde extrémité (87) de l'élément de verrouillage avant (81) vient en prise avec une saillie (77) dans la seconde piste d'engagement (73), et en même temps la première extrémité (85) de l'élément de verrouillage arrière (83) vient en prise avec une saillie (77) dans la première piste d'engagement (69) tandis que la seconde extrémité (87) de l'élément de verrouillage avant (81) vient en prise avec un évidement (79) dans la seconde piste d'engagement, et inversement, lors d'un mouvement asynchrone des premier et deuxième éléments de liaison (19, 21), l'élément de verrouillage avant (81) et/ou l'élément de verrouillage arrière (83) provoquent un blocage entre une saillie (77) de la première piste d'engagement (69) et une saillie (77) de la seconde piste d'engagement, verrouillant ainsi la première piste d'engagement (69) et la seconde piste d'engagement (73) l'une contre l'autre.

10. Aile (5) selon l'une quelconque des revendications 7 à 9, dans laquelle l'élément de verrouillage avant (81) et/ou l'élément de verrouillage arrière (83) sont montés mobiles sur l'aile principale (11) par un palier lisse (89) ou un palier articulé (91) permettant le déplacement de l'élément de verrouillage avant (81) et de l'élément de verrouillage arrière (83) entre la première piste d'engagement (69) et la seconde piste d'engagement (73).

11. Aile (5) selon l'une quelconque des revendications 2 à 10, dans laquelle l'agencement de synchronisation (57) comprend un dispositif limiteur de couple configuré pour arrêter le système d'entraînement (25) lorsque le mécanisme de verrouillage (75) se verrouille réciproquement avec les première et seconde pistes d'engagement (69, 73).

12. Aile (5) selon l'une quelconque des revendications 2 à 10, dans laquelle l'ensemble hypersustentateur (13) est formé sous la forme d'un ensemble hypersustentateur de bord d'attaque, le corps hypersustentateur (15) est formé sous la forme d'un bec, et les premier et deuxième éléments de liaison (19, 21) sont formés sous la forme d'un premier et d'un second rail de bec (20, 22), dans laquelle chacun du premier rail de bec (20) et du second rail de bec (22) a une forme allongée qui s'étend le long d'un axe longitudinal de rail entre une extrémité avant et une extrémité arrière et présente une partie intermédiaire entre les extrémités avant et arrière, dans laquelle l'extrémité avant de chacun des premier et second rails de bec (20, 22) est montée sur le bec, dans laquelle l'extrémité arrière et/ou la partie intermédiaire de chacun des premier et second rails de bec (20, 22) sont montées mobiles sur l'aile principale (11), de telle sorte que le rail de bec (20, 22) est mobile le long de l'axe longitudinal de rail.

13. Aéronef (1) comprenant une aile (5) selon l'une quelconque des revendications 2 à 12 et/ou comprenant un ensemble hypersustentateur (13) selon la revendication 1.
